# FASCICULE DE BREVET EUROPEEN

(11) **EP 3 849 888 B1**
(45) Date de publication et mention de la délivrance du brevet: **15.11.2023**
(21) Numéro de dépôt: 19774145.7
(22) Date de dépôt: 28.08.2019
(51) Int. Cl.: B62D 65/02, E05D 5/04, E05D 5/06

(54) **CHARNIÈRE DE CAPOT DE VÉHICULE AUTOMOBILE AVEC FIXATION PROVISOIRE**
SCHARNIER FÜR EINE MOTORHAUBE EINES KRAFTFAHRZEUGS MIT PROVISORISCHER BEFESTIGUNG
HINGE FOR A MOTOR VEHICLE HOOD WITH PROVISIONAL FASTENING

(30) Priorité: 10.09.2018 FR 1858098
(43) Date de publication de la demande: 21.07.2021
(73) Titulaire: PSA Automobiles SA, 78300 Poissy (FR)
(72) Inventeur: SIMON, Herve, 78190 TRAPPES (FR)
(86) Numéro de dépôt international: PCT/FR2019/051976
(87) Numéro de publication internationale: WO 2020/053497

(56) Documents cités:
- DE-B3-102008 056 430
- JP-B2- 5 246 125
- JP-U- S 641 183
- US-A- 6 003 204
- US-A1- 2010 024 170

## Description

L'invention a trait au domaine des véhicules automobiles, plus particulièrement au domaine des charnières d'ouvrant, tel qu'un capot.

Le montage d'un ouvrant sur la structure d'un véhicule nécessite généralement l'utilisation d'une ou plusieurs charnières. Les charnières sont le plus souvent composées d'une lame fixe positionnée sur la structure du véhicule, et une lame mobile positionnée sur l'ouvrant. La charnière est apte à permettre le déplacement de l'ouvrant par rapport à la structure du véhicule.

Le document de brevet publié JP 5246125 B2 divulgue une charnière pour capot de véhicule apte à amortir l'impact causé par une collision à l'avant du véhicule. Une telle charnière dispose d'une base et d'un bras, le bras présentant une courbure au niveau de sa liaison avec la base. Mais cette charnière n'est pas facile à installer sur un véhicule, du fait de la faible accessibilité aux éléments de fixation rattachant la base à la structure, et du fait du déséquilibre de la charnière, causée par la différence de taille entre la base et le bras.

Les charnières de capot présentent en effet une forme un peu particulière essentiellement due à la configuration du capot. Ce dernier forme habituellement à son bord arrière deux pointes à proximité desquelles l'axe de pivotement doit passer. Les charnières disposent par conséquent des pivots reculés vers l'arrière par rapport aux zones de fixation sur la structure du véhicule. Elles ont par conséquent souvent un centre de gravité reculé et décalé par rapport aux zones de fixation, les rendant instables lorsqu'elles sont présentes sur la structure avant fixation. Le document US 6 003 204 A montre un véhicule selon le préambule de la revendication 1.

L'invention a pour objectif de pallier au moins un des inconvénients de l'état de la technique susmentionné. Plus particulièrement, l'invention a pour objectif de fixer provisoirement la charnière d'un ouvrant, et ce avant son montage définitif sur le véhicule.

L'invention a pour objet un véhicule selon la revendication 1.

Selon un mode avantageux de l'invention, le doigt de la lame fixe forme un crochet apte à engager avec un ajour pratiqué dans le support.

Selon un mode avantageux de l'invention, le doigt de la lame fixe présente un profil, suivant une direction principale de ladite lame, en forme de S.

Selon un mode avantageux de l'invention, le doigt de la lame fixe est configuré pour, lors du montage de ladite lame, être inséré dans un ajour pratiqué dans le support et ensuite engager avec ledit ajour après rabattement de ladite lame sur ledit support. Selon un mode avantageux de l'invention, la lame fixe comprend, suivant une direction principale de ladite lame, une première moitié comprenant le doigt et une deuxième moitié, le montage pivotant de la lame mobile étant sur la deuxième moitié.

Selon un mode avantageux de l'invention, la lame fixe comprend un ou plusieurs orifices de réception des moyens de fixation à serrage, ledit ou lesdits orifices étant situés exclusivement sur la première moitié.

Selon un mode avantageux de l'invention, la charnière présente un centre de gravité, lorsque la lame mobile est rabattue et essentiellement parallèle à la lame fixe, situé longitudinalement à hauteur de la deuxième moitié de ladite lame fixe.

Selon l'invention, pour la ou chacune des charnières, la structure de carrosserie comprend un support recevant la lame fixe, le centre de gravité de ladite charnière étant situé, longitudinalement, au-delà dudit support.

Selon l'invention, le capot est à l'avant du véhicule et pour la ou chacune des charnières l'extrémité de la lame fixe comprenant le doigt est une extrémité avant, le centre gravité étant situé à l'arrière du support.

Les mesures de l'invention sont intéressantes en ce qu'elles permettent de faciliter le montage de la charnière sur la structure du véhicule grâce à la présence d'une fixation provisoire entre la lame fixe et le support, fixation préférentiellement réalisée au moyen d'un crochet. L'invention est également peu coûteuse, car elle ne nécessite pas un grand nombre de pièces ou de modifications des pièces existantes. Elle permet, en outre, un gain de temps de la part du monteur, puisqu'il n'aura pas besoin de maintenir la charnière avant de la fixer sur la structure et qu'une seule vis est nécessaire à la fixation de la charnière sur la structure. Du fait du positionnement de la lame mobile par rapport à la lame fixe, la charnière est également peu encombrante. D'autres caractéristiques et avantages de la présente invention seront mieux compris à l'aide de la description et des dessins parmi lesquels :
- La figure 1 est une vue en perspective d'un véhicule automobile avec une charnière selon l'invention ;
- La figure 2 montre une vue latérale de la charnière de la figure 1 ;
- La figure 3 montre une vue en coupe de la charnière des figures 1 et 2.

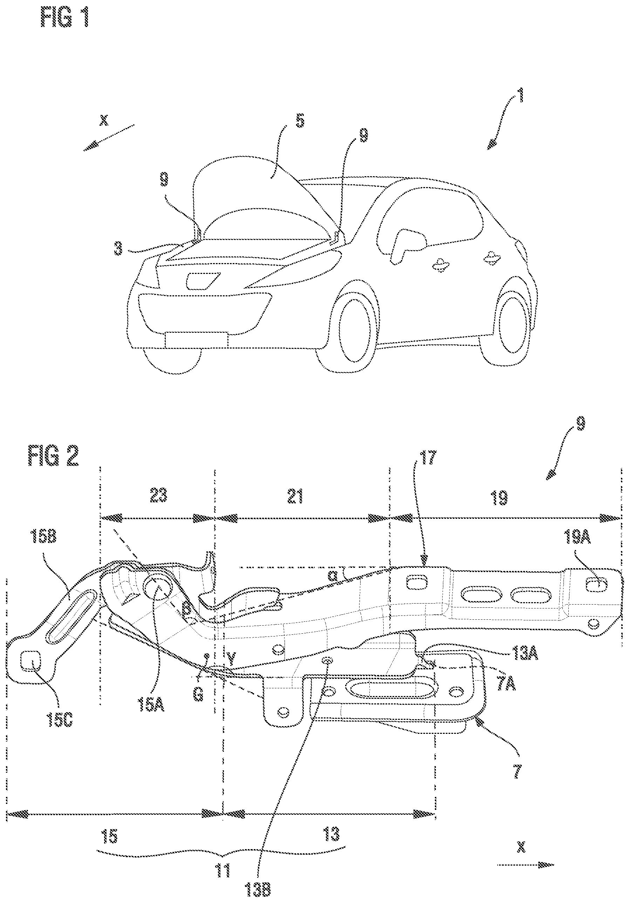

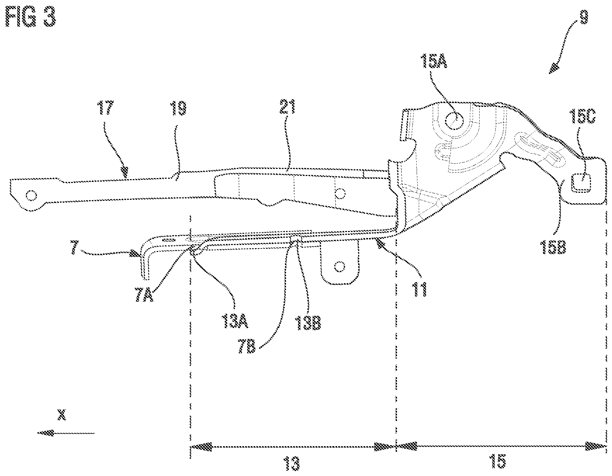

La figure 1 est une vue d'un véhicule automobile comprenant une charnière selon l'invention. Un ouvrant 5 de véhicule automobile 1, tel qu'un capot 5, est généralement relié à une structure de carrosserie 3 par une ou des charnières 9. Dans le cadre de l'invention, le capot 5 du véhicule 1 est positionné à l'avant dudit véhicule 1. La flèche de direction x donne une direction longitudinale correspondant à la direction de déplacement du véhicule 1, et à la direction principale x de la charnière 9 (pour les figures 2 et 3).

Les figures 2 et 3 montrent, respectivement, une vue latérale et une vue en coupe de la charnière selon l'invention. La charnière 9 selon l'invention comprend une lame fixe 11 et une lame mobile 17. De manière générale, la lame fixe 11 est fixée à un support 7 de véhicule automobile (non visible sur ces figures), ledit support 7 permettant une fixation sur la structure de carrosserie dudit véhicule (non montrée sur les figures 2 et 3). La lame mobile 17, en revanche, est montée pivotante sur la lame fixe 11, et est fixée à l'ouvrant (non montré sur les figures 2 et 3).

La lame mobile 17 de la charnière 9 comprend trois portions : une portion antérieure 19, une portion médiane 21 et une portion postérieure 23. La portion antérieure 19 de la lame mobile 17 est plane, et présente un ou des orifices de fixation 19A de la lame mobile 17 au capot (visible à la figure 1). La portion médiane 21 de la lame mobile 17 est pentue, elle présente un angle α orienté vers le bas de la charnière 9, angle compris entre 0 et 20° par rapport à la portion antérieure 19. La portion postérieure 23 présente un angle β compris entre 100° à 140° par rapport à la portion médiane 21, angle dont l'orientation est située vers le haut de la charnière 9. À l'extrémité supérieure de la portion postérieure 23 se trouve le montage pivotant de la lame mobile 17 à la lame fixe 11. La forme particulière de la lame mobile 17 permet un encombrement minimal de la charnière 9 tout en permettant un degré d'ouverture important de la lame mobile 17 par rapport à la lame fixe 11, donc une bonne ouverture du capot (visible à la figure 1).

La lame fixe 11 de la charnière 9 présente deux moitiés suivant une direction principale x de la lame fixe 11, une première moitié 13 positionnée antérieurement à une deuxième moitié 15. La deuxième moitié 15 comprend le montage pivotant à la lame mobile 17, par le biais d'un axe de liaison 15A. La deuxième moitié 15 de la lame fixe 11 présente, en outre, une patte postérieure 15B avec un orifice de fixation 15C, cette patte 15B permettant d'améliorer la fixation de la lame fixe 11 sur la structure de carrosserie (non visible sur les figures 2 et 3). La deuxième moitié 15 de la lame fixe 11 est pentue par rapport à la première moitié 13 plane, et présente un angle obtus γ compris entre 120° et 180°, angle orienté vers le haut de la charnière 9. La première moitié 13 de la lame fixe 11 comprend, à son extrémité avant, un doigt 13A, formant préférentiellement un crochet. Ce doigt 13A présente un profil suivant la direction principale x de la lame fixe 11, en forme de S. La première moitié 13 de la lame fixe 11 présente en outre un ou plusieurs orifices de réception 13B de moyens de fixation à serrage (non visibles sur ces figures).

Sur les figures 2 et 3 est également visible le support 7 qui permet la fixation de la charnière 9 sur la structure de carrosserie du véhicule (non visible sur les figures 2 et 3). Le support 7 présente un ajour 7A, le doigt 13A de la première moitié 13 de la lame fixe 11 étant apte à engager avec cet ajour 7A. Le support 7 comprend, en outre, des orifices de réception 7B aptes à accueillir les moyens de fixation à serrage (non visibles sur ces figures). Ainsi, le support 7 de la structure de carrosserie reçoit la lame fixe 11.

Seule une portion de la première moitié 13 de la lame fixe 11 est en contact avec le support 7, et est fixée audit support 7 par les moyens de fixation à serrage (non visibles sur ces figures). Cette particularité, associée au fait que le montage pivotant des lames fixe et mobile (11, 17) est positionné à l'arrière de la charnière 9, entraîne un déséquilibre de ladite charnière 9 (associé au centre de gravité G positionné à l'arrière du support 7). Ce centre de gravité G est décrit, dans la présente demande, uniquement lorsque la lame mobile 17 est rabattue sur la lame fixe 11, donc lorsque la lame mobile 17 est située longitudinalement à hauteur de la deuxième moitié 15 de la lame fixe 11. Du fait du décalage du centre de gravité G, il est important, pour éviter le déséquilibre et le déplacement de la charnière 9 lors du montage, d'intégrer une fixation provisoire avant la mise en place des moyens de fixation à serrage. Cette fixation provisoire prend la forme du crochet 13A décrit auparavant, et à son insertion dans l'ajour 7A positionné dans le support 7. Ce doigt 13A engage avec l'ajour 7A après rabattement de la lame fixe 11 sur le support 7.

## Revendications

1. Véhicule automobile (1) comprenant une structure de carrosserie (3), un capot (5) et au moins une charnière (9) reliant ledit capot (5) à un support (7) solidaire de la structure (3), la au moins une charnière (9) comprenant :
- une lame fixe (11) configurée pour être fixé au support (7) ; et
- une lame mobile (17) montée pivotante sur la lame fixe (11) et configurée pour être fixée à l'ouvrant (5) ;
la lame fixe (11) comprenant, à une extrémité, un doigt (13A) apte à engager avec le support (7) afin d'assurer, lors du montage de ladite lame (11), une fixation provisoire avant une mise en place de moyens de fixation à serrage, ladite au moins une charnière (9) présente un centre de gravité G situé, longitudinalement, au-delà dudit support (7), le capot (5) étant à l'avant du véhicule (1), **caractérisé en ce que** pour la au moins une charnière (9), l'extrémité de la lame fixe (11) comprenant le doigt (13A) est une extrémité avant, le centre de gravité G étant situé à l'arrière du support (7).

2. Véhicule automobile (1) selon la revendication 1, **caractérisé en ce que** le doigt (13A) de la lame fixe (11) forme un crochet (13A) apte à engager avec un ajour (7A) pratiqué dans le support (7).

3. Véhicule automobile (1) selon l'une des revendications 1 et 2, **caractérisé en ce que** le doigt (13A) de la lame fixe (11) présente un profil, suivant une direction principale (x) de ladite lame (11), en forme de S.

4. Véhicule automobile (1) selon l'une des revendications 1 à 3, **caractérisé en ce que** le doigt (13A) de la lame fixe (11) est configuré pour, lors du montage de ladite lame (11), être inséré dans un ajour (7A) pratiqué dans le support (7) et ensuite engager avec ledit ajour (7A) après rabattement de ladite lame (11) sur ledit support (7).

5. Véhicule automobile (1) selon l'une des revendications 1 à 4, **caractérisé en ce que** la lame fixe (11) comprend, suivant une direction principale (x) de ladite lame (11), une première moitié (13) comprenant le doigt (13A) et une deuxième moitié (15), le montage pivotant de la lame mobile (17) étant sur la deuxième moitié (15).

6. Véhicule automobile (1) selon la revendication 5, **caractérisé en ce que** la lame fixe (11) comprend un ou plusieurs orifices de réception (13B) des moyens de fixation à serrage, ledit ou lesdits orifices (13B) étant situés exclusivement sur la première moitié (13).

7. Véhicule automobile (1) selon l'une des revendications 5 et 6, **caractérisé en ce que** le centre de gravité G de ladite au moins une charnière (9) est, lorsque la lame mobile (17) est rabattue et essentiellement parallèle à la lame fixe (11), situé longitudinalement à hauteur de la deuxième moitié (15) de ladite lame fixe (11).

## Patentansprüche

1. Kraftfahrzeug (1), das eine Karosseriestruktur (3), eine Motorhaube (5) und mindestens ein Scharnier (9) umfasst, das die Motorhaube (5) mit einem Träger (7) verbindet, der mit der Struktur (3) fest verbunden ist, wobei das mindestens eine Scharnier (9) umfasst:
- ein feststehendes Messer (11), das zur Befestigung am Träger (7) ausgebildet ist, und
- ein bewegliches Messer (17), das schwenkbar an dem feststehenden Messer (11) angebracht und zur Befestigung an dem Flügel (5) ausgebildet ist;
die feststehende Klinge (11), die an einem Ende einen Finger (13A) aufweist, der mit der Halterung (7) in Eingriff kommen kann, um bei der Montage der Klinge (11) eine vorläufige Befestigung vor der Anbringung von Klemmbefestigungsmitteln sicherzustellen, wobei das mindestens eine Scharnier (9) einen Schwerpunkt G aufweist, der in Längsrichtung jenseits der Halterung (7) angeordnet ist, wobei die Abdeckung (5) vor dem Fahrzeug (1) angeordnet ist, **dadurch gekennzeichnet, dass** für das mindestens eine Scharnier (9) das Ende der feststehenden Klinge (11), das den Finger (13A) aufweist, ein Ende ist vorn, wobei sich der Schwerpunkt G auf der Rückseite der Halterung (7) befindet.

2. Kraftfahrzeug (1) nach Anspruch 1, **dadurch gekennzeichnet, dass** der Finger (13A) des feststehenden Blattes (11) einen Haken (13A) bildet, der mit einem Durchbruch (7A) in dem Träger (7) in Eingriff kommen kann.

3. Kraftfahrzeug (1) nach einem der Ansprüche 1 und 2, **dadurch gekennzeichnet, dass** der Finger (13A) der feststehenden Klinge (11) ein S-förmiges Profil in einer Hauptrichtung (x) der Klinge (11) aufweist.

4. Kraftfahrzeug (1) nach einem der Ansprüche 1 bis 3, **dadurch gekennzeichnet, dass** der Finger (13A) der feststehenden Klinge (11) so ausgebildet ist, dass er bei der Montage der Klinge (11) in eine Öffnung (7A) in der Halterung (7) eingesetzt werden kann und dann mit der Öffnung (7A) in Eingriff kommt, nachdem die Klinge (11) auf die Halterung (7) umgeklappt wurde.

5. Kraftfahrzeug (1) nach einem der Ansprüche 1 bis 4, **dadurch gekennzeichnet, dass** die feststehende Klinge (11) in einer Hauptrichtung (x) der Klinge (11) eine erste Hälfte (13), die den Finger (13A) umfasst, und eine zweite Hälfte (15) umfasst, wobei die Schwenkbefestigung der beweglichen Klinge (17) auf der zweiten Hälfte (15) ist.

6. Kraftfahrzeug (1) nach Anspruch 5, **dadurch gekennzeichnet, dass** die feststehende Klinge (11) eine oder mehrere Aufnahmeöffnungen (13B) für die Klemmbefestigungsmittel aufweist, wobei die mindestens eine Öffnung (13B) ausschließlich auf der ersten Hälfte (13) angeordnet ist/sind.

7. Kraftfahrzeug (1) nach einem der Ansprüche 5 und 6, **dadurch gekennzeichnet, dass** der Schwerpunkt G des mindestens einen Scharniers (9), wenn das bewegliche Messer (17) umgeklappt und im Wesentlichen parallel zu dem feststehenden Messer (11) ist, in Längsrichtung in Höhe der zweiten Hälfte (15) des feststehenden Messers (11) liegt.

## Claims

1. Motor vehicle (1) comprising a bodywork structure (3), a hood (5) and at least one hinge (9) connecting said hood (5) to a support (7) integral with the structure (3), the at least one hinge (9) comprising:
- a fixed blade (11) configured to be fixed to the support (7); and
- a movable blade (17) pivotally mounted on the fixed blade (11) and configured to be attached to the door (5);
the fixed blade (11) comprising, at one end, a finger (13A) able to engage with the support (7) in order to ensure, during the mounting of said blade (11), a temporary fixing before a fitting of clamping fixing means, said at least one hinge (9) has a center of gravity G situated, longitudinally, beyond said support (7), the cover (5) being at the front of the vehicle (1), **characterized in that** for the at least one hinge (9), the end of the fixed blade (11) comprising the finger (13A) is a front end, centre of gravity G being located at the rear of the support (7).

2. Motor vehicle (1) according to claim 1, **characterized in that** the finger (13A) of the fixed blade (11) forms a hook (13A) able to engage with an opening (7A) made in the support (7).

3. Motor vehicle (1) according to one of claims 1 and 2, **characterized in that** the finger (13A) of the fixed blade (11) has an S-shaped profile in a main direction (x) of the said blade (11).

4. Motor vehicle (1) according to one of claims 1 to 3, **characterized in that** the finger (13A) of the fixed blade (11) is configured so that, during mounting of the said blade (11), it is inserted into an opening (7A) made in the support (7) and then engages with the said opening (7A) after the said blade (11) has been folded down onto the said support (7).

5. Motor vehicle (1) according to one of claims 1 to 4, **characterized in that** the fixed blade (11) comprises, in a main direction (x) of the said blade (11), a first half (13) comprising the finger (13A) and a second half (15), the pivoting mounting of the mobile blade (17) being on the second half (15).

6. Motor vehicle (1) according to claim 5, **characterized in that** the fixed blade (11) comprises one or more orifices (13B) for receiving the clamping fixing means, said orifice or orifices (13B) being situated exclusively on the first half (13).

7. Motor vehicle (1) according to one of Claims 5 and 6, **characterized in that** the centre of gravity G of the said at least one hinge (9) is, when the movable blade (17) is folded down and essentially parallel to the fixed blade (11), situated longitudinally at the height of the second half (15) of the said fixed blade (11).
